# EUROPEAN PATENT SPECIFICATION

(11) **EP 1 645 072 B1**
(45) Date of publication and mention of the grant of the patent: **08.08.2007**
(21) Application number: 05747496.7
(22) Date of filing: 25.05.2005
(51) Int. Cl.: H04L 12/18

(54) **DYNAMIC AND TRAFFIC-DRIVEN OPTIMIZATION OF MESSAGE ROUTING TO GEOGRAPHICAL ADDRESSES**
DYNAMISCHE UND VERKEHRSGESTEUERTE OPTIMIERUNG DER NACHRICHTENLEITWEGLENKUNG ZU GEOGRAPHISCHEN ADRESSEN
OPTIMISATION DYNAMIQUE ET DEPENDANTE DU TRAFIC DE L'ACHEMINEMENT DES MESSAGES VERS DES ADRESSES GEOGRAPHIQUES

(30) Priority: 04.06.2004 US 576843 P
(43) Date of publication of application: 12.04.2006
(73) Proprietor: SIEMENS AKTIENGESELLSCHAFT, 80333 München (DE)
(72) Inventor: HERMANN, Sven, 31141 Hildesheim (DE); LIPKA, Michael, 80687 München (DE); SCHÄFER, Günter, 10551 Berlin (DE)
(86) International application number: PCT/EP2005/052396
(87) International publication number: WO 2005/119965

(56) References cited:
- WO-A-03/003650
- NAVAS ET AL: "GeoCast - geographic addressing and routing" MOBICOM. PROCEEDINGS OF THE ANNUAL INTERNATIONAL CONFERENCE ON MOBILE COMPUTING AND NETWORKING, 26 September 1997 (1997-09-26), pages 66-76, XP002155093 cited in the application
- IMIELINSKI J NAVAS RUTGERS UNIVERSITY T: "GPS-Based Addressing and Routing" IETF STANDARD, INTERNET ENGINEERING TASK FORCE, IETF, CH, November 1996 (1996-11), XP015007793 ISSN: 0000-0003 cited in the application
- AN B ET AL: "A GEOCAST ARCHITECTURE FOR MOBILE CELLULAR NETWORKS" PROCEEDINGS OF THE 2ND. INTERNATIONAL WORKSHOP ON NETWORKED GROUP COMMUNICATION. (NGC 2000). PALO ALTO, CA, NOV. 8 - 10, 2000, INTERNATIONAL WORKSHOP ON NETWORKED GROUP COMMUNICATION, NEW YORK, NY : ACM, US, 8 November 2000 (2000-11-08), pages 59-67, XP000993982 ISBN: 1-58113-312-X

## Description

### Field of the invention

The invention is used in communications networks to ensure that a service provider can set up services to customers or mobile users in a special selected geographical area.

### Summary of the invention

In the nearer future service providers will offer customers the possibility to set up services in a special selectable geographical area or to send information to it. By this way, mobile (wireless) users can be maintained with useful services and information which is related to their current position, e.g. special offers can be advertised to users who are located in the area of a shop.

One of the required basic functionalities to realize such services is a method to send data from the service provider to a chosen geographic area, i.e. to the access routers which cover these areas with their wireless access technology. This can be achieved by inserting the geographical destination coordinates in each message. It is assumed that every access router knows the coordinates of its coverage area and all relevant intermediate network systems know the coverage areas of the other systems which are connected to them. In this case each router performs a test if the geographical area which is covered by its connected access routers or the coverage areas of other routers which are connected to it comply with the target address and forward it to the appropriate system. The described mechanism is called GeoCast [1].

The drawback of the described mechanism is the delay which is caused by the expensive intersection checks in the intermediate systems before a message can be forwarded towards its destination. Additionally, the intermediate systems may become a performance bottleneck resulting in congestion if the number of messages to be routed exceeds a certain rate.

A need therefore exists for a technique that can reduce the delay caused by intermediate systems performing intersection checks in order to deliver a message towards its destination in a geographical area, and reducing the bottlenecks that systems may cause which in turn cause performance to degrade.

With the present invention, the abovementioned issues are resolved in an efficient and simple manner. The proposed technique allows for the delivery of a message to a destination within a geographical area.

The technique is achieved by the teachings contained in the independent method and network device claims.

Said method for delivering messages in a communications network comprises the steps of:
- monitoring an arrival rate of messages destined for a geographical area within a short time period;
- establishing upon reaching a threshold, a multicast group for routing said messages to said geographical area, wherein network devices responsible for delivering said messages join said multicast group;
- delivering upon establishment of said multicast group said messages to said geographical area.

Said network device located in a communications network, comprises means for employing the method according to claims 1 to 7.

Advantages can be seen in the dependent claims, whereby any further messages destined for the geographical area arriving after the establishment of a multicast group are delivered via the established multicast group, after a predefined time period has elapsed within which no further messages destined for the geographical area arrive the multicast group is removed, each message destined for the geographical area are defined by a geographical destination address, the geographical destination address of the messages are identical or similar, monitoring the rate of arrival of messages is performed using a soft state message counter and whereby fast internet protocol forwarding is used to forward the messages in said multicast group.

The present invention will become more fully understood from the detailed description given herein below and the accompanying drawings which are given by way of illustration only, and thus are not limitative of the present invention, and wherein:
Fig. 1.1 Routing to geographical areas.
Fig. 3.1 Dynamically established multicast groups.
Fig. 3.2 Overview of the dynamical multicast group establishment.

### Detailed description of the invention

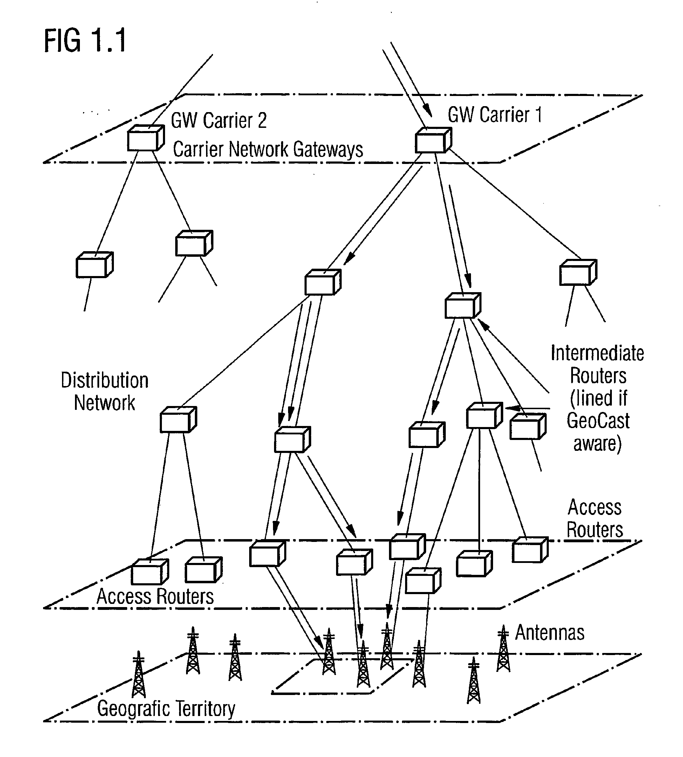

We assume that an architecture as shown in Figure 1.1 exists. It presents a simple distribution network which is connected via a gateway (GW) with the internet. The access routers in the distribution network host the antennas which have a certain coverage area. GW and access routers are connected via several intermediate routers. Some of them are not GeoCast aware, so each message has to be tunnelled with IP unicast through them.

In the geographic territory an area has been defined. When a message is send to this area, it is routed through the distribution network to the access routers which are connected to those antennas which supply the area, i.e. which coverage area corresponds to it.

The gateway performs an intersection check and forwards the message to two intermediate routers, which have to perform the check again and so on until the message reaches the access routers. The access routers then emit the message in the geographical area.

In the simple example shown in the figure 1.1 totally six intersection checks have to be performed in the GeoCast nodes of the network.

Simulation results for a prototypical GeoCast routing system (see [1]) show that the forwarding decision in an intermediate system will take up to 4,426 times more that that of an IP router (in fact that a IP router uses firmware has to be considered but the result nevertheless roughly shows the scale of the performance difference). These results show that the packet delay resulting from the duration of the forwarding decision would increase heavily and that a congestion of an intermediate router might result if it has to route too many packets.

Our invention deals with several aims:
1. The main goal is to find a more efficient solution to route messages to its targets, i.e. to circumvent the intersection checks on the application level or any other application level processing in the intermediate routers.
2. A second goal of equal practical importance is to avoid another drawback of GeoCast: the fact that every message is send via unicast between geocast routers even if multiple geocast routers to be addressed share a significant part of the network path from the sending geocast router to the receiving geocast routers, resulting in unnecessary message duplication in parts of the distribution network. To save resources in the distribution network it is desirable to duplicate message as close as possible to the point in the network (IP router) where the network paths to different destinations actually diverge.

Up to now, there is no solution which explicitly addresses the dynamic adaptive configuration of distribution networks for routing to geographical addresses. A mechanism which utilizes dynamic multicast groups to circumvent intersection checks does not exist.

Several efforts have been made to develop mechanisms which are able to forward messages to geographic areas.

### GeoCast:

The GeoCast mechanism which has been introduced at the beginning of this document relies on the intersection checks of the geographical target address of a message with the coverage area of each intermediate system. As already stated, the checks require a non-negligible amount of computing power and time. Additionally, an expensive parsing of the address is required depending on its presentation in the message. The intersection check has to be performed for each single message. At least, GeoCast uses cache entries to speed up forwarding decisions. Messages are identified via an ID or by other values which are part of the message header e.g. the source and destination address. After the first packet has been received the resulting forwarding decision is stored in the cache. Following messages with the same ID can skip the intersection check but nevertheless the message must be processed by the geographic routing module to determine the ID and the corresponding cache entry in each router. Further disadvantages are that the messages are sent via unicast and so there is no mechanism in place to reduce the overall amount of messages to be transmitted in the network (e.g. no multicast routing). No mechanism for dynamic optimization of message routing is provided.

### Deployment of static multicast groups:

Another mechanism, which relies on IP multicast is called GPS-Multicast Routing Scheme [2]. To speed up the forwarding decision static multicast groups are established in the distribution network. Routers are combined to Atoms and a multicast address is assigned to them. Several atoms are combined to a partition with an own address again and partitions can be combined to larger partitions. A geographical target address polygon in a message is then approximated with the smallest partition which contains it and sent to the corresponding IP multicast address. This requires a mapping from the geographical destination address to the multicast group. One disadvantage of this approach is the fact that the multicast groups will only rarely match the exact target areas. This means that several systems in the network will erroneously receive the packets, perform an intersection check and discard it. The main drawback of this approach is that before the static multicast mechanism can be utilized in the network, a division of the coverage areas into atoms and partitions is necessary. This leads to a difficult network planning problem requiring expensive considerations or estimations of the (at this time still unknown) traffic patterns and a lot of administrative interaction for the pre-configuration of the network and during its operation. Another problem with this approach is that it has to be decided a priori how to partition the geographic topology and which multicast groups to create, which is very likely to lead to many only rarely or not at all used multicast groups for which (rare) multicast addresses have to be assigned and signalling traffic has to be exchanged and processed.

### Deployment of dynamic multicast groups on the last hop:

For the distribution of the message between the access router and the mobile clients in its coverage area the GPS-Multicast Routing Scheme [2] deploys multicast groups for the "last Mile" routing. An access router assigns a group to all mobile clients in a specific area. This happens also dynamically and is based e.g. on the specific geographical polygon. All mobile clients in it can join the group because of knowing their geographical address derived from their assumed GPS module. In contrast to the invention described in this invention report, the multicast groups are not deployed in the distribution network to reduce the packet delay and speed up the forwarding decisions in the intermediate systems, but the groups are only valid between access routers and mobile clients and have the purpose to reduce the amount of unnecessary messages mobile clients will receive and to save rare resources of the air interface. Another disadvantage of this mechanism is that for each specific individual geographic address one multicast group is assigned and maintained.

In order to reduce the forwarding delay and amount of required intersection checks and messages, the invention described in this invention report provides a mechanism to establish multicast groups in the network which are dynamically adapted, depending on the occurring data traffic. If a certain amount of messages arrives in a short period of time with the same or a similar geographical target address, an IP multicast group will be established by the network which contains all the access routers being responsible for the message forwarding, i.e. all those access routers which would usually forward the message when they received it after an intersection check requiring forwarding procedure through the distribution network. The advantage of the described mechanism is based on the fact that an IP multicast forwarding decision in an intermediate system is multiple times faster that a GeoCast one.

In detail, a upper level router in the distribution network, e.g. the gateway, monitors if it receives several messages with the same or very similar destination addresses in a short period of time (e.g. in case service providers want to address users in an area with a special event). The period or arrival rate is chosen in a way that the router can estimate that multiple messages with the same address will follow. This can, for example, be realized with a soft state message counter. By monitoring the traffic load of geographic areas, the geocast router is able to compute optimal geographic areas for multicast distribution of geographic messages, optimizing between various tradeoffs /number of multicast groups, number of unnecessarily distributed messages, signalling load for multicast group maintenance, etc.).

Afterwards the access routers which are responsible for the message delivery to parts of the addressed geographical area are requested to join a dynamically created multicast group. The request is send from the upper level router via a standard geographical addressed message to the access routers and intercepted by them. After the respective access routers processed the request and joined the multicast group and confirmed it, messages for the area are directly send to the IP multicast group. All intermediate systems utilize fast standard IP forwarding for the messages making the expensive intersection checks in the intermediate systems unnecessary and enable the network to duplicate the messages as close to the target systems as possible. The access routers remove the multicast IP information from the messages and forward them according to their geographical target addresses. A multicast group is removed if no messages with the respective target addresses arrive any more for a certain period of time.

The proposed mechanism is suited for the next generation of services, which are related to specific areas (so called Area Based Services). It is a basic technology deployable in the network infrastructure to speed up the forwarding decisions in intermediate systems. With faster decisions the delay for message delivery is also shortened.

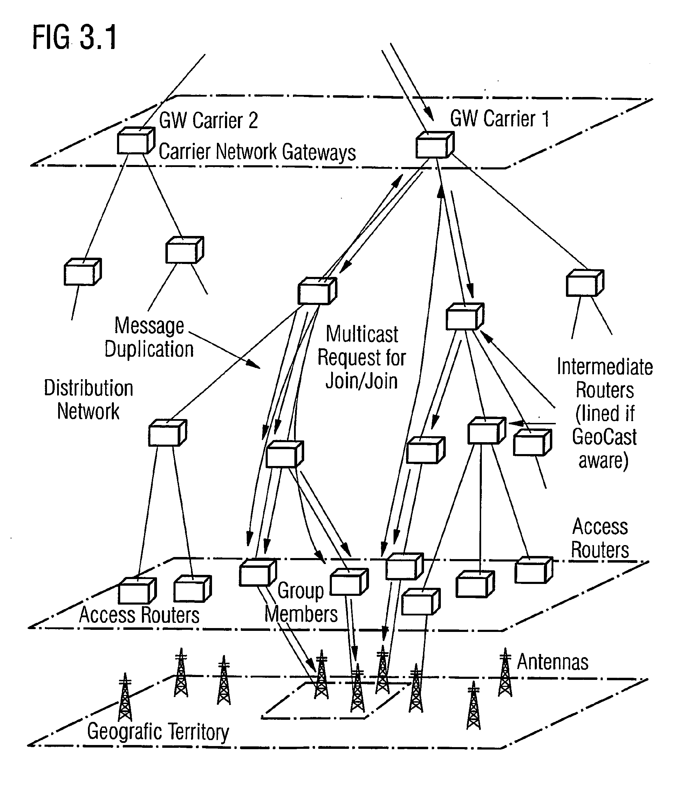

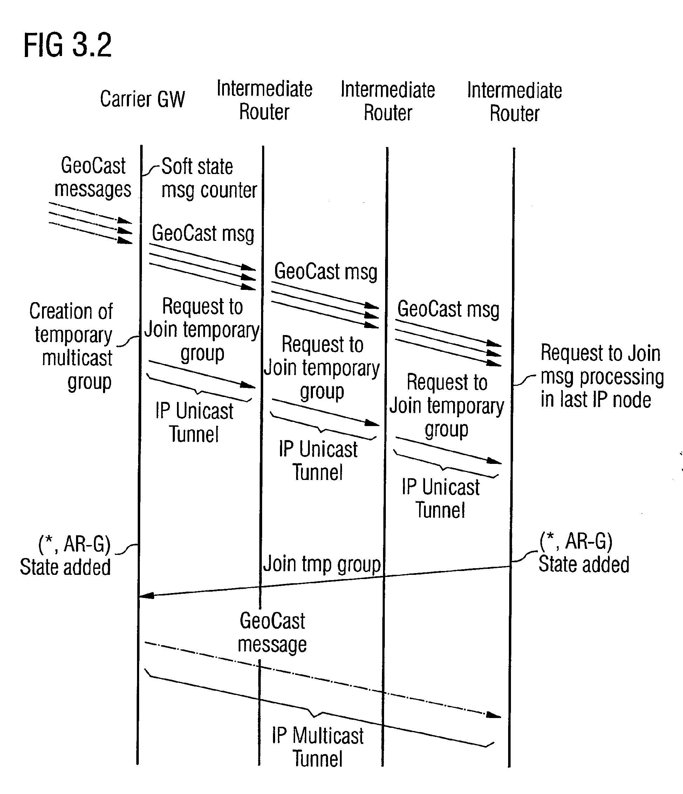

Figure 3.1 shows the distribution network with a dynamically established multicast group.

The following section presents a more detailed explanation of the invention.

Figure 3.2 gives an overview of the dynamic multicast group establishment procedure in the distribution network. The explanations in detail:
1. A router in the distribution network close to the gateway or the gateway (i.e. upper level router) itself possesses a soft state message counter. It counts the GeoCast messages with the same or a similar geographical target address which appear in certain period of time. As long as no dynamic multicast groups have been established, the messages are forwarded via GeoCast (i.e. with intersection checks or other application layer involving decisions) through different intermediate routers to the access routers which directly emit the message in the geographical territory.
2. After a certain amount of messages addressed to a certain area have arrived in a defined period of time, the upper level router starts with the creation of a temporary multicast group to speed up the forwarding procedure in the distribution network. Therefore, it encapsulates a Request to Join temporary group message in a GeoCast message. This message contains the address of the temporary multicast group. Like the other messages before this message is send via GeoCast through the distribution network to the access routers.
3. After receiving the encapsulated message the access routers start with the Request to Join message processing. They add a (*, AR-G) state which means that they receive multicast messages which are send by an arbitrary source to the multicast group address which was send in the original message from the upper level router.
4. When the state is added a Join temporary group message is send back to the upper level router.
5. Fort the future usage of a multicast address, the upper level router has to be sure that every concerned access router has joined the multicast group. Therefore, the delivery of the exchanged join messages has to be reliable. This means that each intermediate router which forwarded the encapsulated Request to Join temporary group message to another router has to receive a Join temporary group message from it, else the process will be repeated.
6. After the upper level router received the Joint temporary group messages it adds the appropriate multicast state to its own routing entries.
7. If a GeoCast message with the matching destination address arrives at the upper level router it is encapsulated in an IP multicast packet and directly send to the access routers. The forwarding in the distribution network is done via fast IP routing decisions.
8. The upper level router monitors incoming messages to other geographical destination addresses. If other messages appear which have to be send to the same or a very similar geographical address, they will be sent to the same multicast address.
9. If no message arrives with the geographical destination address for a certain period of time, the dynamic multicast group is removed from the network. This can be achieved via an explicit pruning message or timeouts.

The following important properties have been achieved:
- Multiple IP multicast groups for different geographic destination addresses can be maintained without wasting rare IP multicast addresses and performing signalling for maintaining the respective multicast groups for geographical areas that receive little to no traffic.
- The required computing time for forwarding decisions in intermediate routers of the distribution network is decreased, allowing a higher volume of traffic in the network.
- The packet delay is significantly reduced in the distribution network, as forwarding decisions for multicast messages can be taken by only looking at the IP address of those messages.
- The traffic volume in the network is reduced by avoiding unnecessary transmission of duplicated messages along shared parts of the network path (leveraging this important feature of multicast routing for distribution of geocast messages).
- The routing optimization process is traffic driven and can therefore be realized as economical as possible regarding the exchange of signalling messages and allocation of addresses.

In the distribution network, multicast groups are dynamically established to reduce forwarding delay and to reduce the amount of duplicated messages.

What is claimed is that novel methods have been developed:
- to circumvent the expensive application level forwarding decisions in intermediate systems in distribution networks for routing to geographical addresses
- to optimize the routing in the distribution network in a traffic driven fashion
- to allow dynamic computation of "high demand geographical areas" and to specifically create multicast groups for efficient message distribution to those areas
- to avoid a difficult and cumbersome "a priori partitioning step of geographic areas" for construction of static multicast groups

Summarizing, our invention represents an important step towards realizing a self-configuring efficient distribution network for routing messages to geographic addresses.

The following shows an illustrative example of the invention. It is related to the architecture of a sample access network, with a distribution network of a certain carrier. The network is connected via a gateway to the internet which is in this case simultaneously the upper level router. Let us assume that a certain public event (e.g. soccer game) takes place in the coverage area (e.g.) of the access routers connected to the network.

Now a certain company wants to advertise its products in this area during the event. It determines the geographical coordinates of the area and inserts them in an advertisement message. The message is then send to the gateway of the distribution network (usually, this step requires the interaction of a service broker but this is out of interest for the invention).

The advertisement message is now send via GeoCast through the distribution network and emitted by the products at once but sends messages to the same area in short time intervals.

After some messages the gateway notices that this geographical address is used very often. It composes a Request to Join temporary group message and inserts an allocated temporary multicast address. This message is encapsulated in a special GeoCast message which has the same geographical coordinates as the other messages. Afterwards it is send out to the distribution network.

The access routers receive the messages and decapsulate them. Instead of delivering them to the area, they start with the Request to Join message processing by joining to the multicast group with the predetermined multicast address.

Afterwards, the Join temporary group message is send back to the gateway. When the intermediate systems and the gateway receives all Request to Join messages (which means that all affected access routers received the message from the gateway), the gateway adds the appropriate multicast state to its own routing entries.

If a GeoCast message with the matching destination address arrives at the upper level router it is encapsulated in an IP multicast packet and directly send to the access routers. The forwarding in the distribution network is done via fast IP routing decisions.

The access routers decapsulate the messages and distribute them in the area via their antennas.

Another company also wants to send advertisements to the area of the public event. It determines the geographical coordinates, which differ only marginal from those which are used by the first company. The company sends messages with the coordinates (i.e. the similar geographical address) to the gateway, too. The gateway notices the similarity and sends the messages to the same already established multicast group address. The rest of the message processing is the same as described above.

When the event ended, neither the first nor the second company sends messages to the area any more. After some time the temporary multicast address is removed in the distribution network, for example via timeouts or explicit pruning messages.

### References:

[1] T. Imielinski, J. Navas, "GeoCast-Geographic Addressing and Routing", Proceedings of the Third ACM/IEEE International Conference on Mobile Computing and Networking (MobiCom'97), Budapest, Hungary. September 1997.
[2] T. Imielinski, J. Navas, "GPS-Based Addressing and Routing" IETF Request for Comments 2009, rfc2009.txt, November 1996.

## Claims

1. Method for delivering messages in a communications network comprising the steps:
- monitoring an arrival rate of messages destined for a geographical area within a defined time period, **characterized by**
- establishing, upon reaching a threshold for said messages arriving within said time period, a multicast group for routing said messages to said geographical area by sending a join request to each network device responsible for delivering said messages to join said multicast group; and
- delivering upon establishment of said multicast group said messages to said geographical area.

2. Method according to claim 1, comprising the further step of delivering any further messages destined for said geographical area arriving after the establishment of said multicast group via said multicast group.

3. Method according to claims 1 or 2, comprising the further step of removing said multicast group after a predefined time period has elapsed within which no further messages destined for said geographical area arrive.

4. Method according to any one of the previous claims, whereby said messages destined for said geographical area are defined each by a geographical destination address.

5. Method according to claim 4, whereby said geographical destination address of said messages is identical or similar.

6. Method according to any one of the previous claims, whereby said monitoring of said rate of arrival is performed using a message counter that counts messages with a same or similar geographical target address.

7. Network device located in a communications network, comprising means for employing the method according to claims 1 to 6.

8. Network device according to claim 7, whereby said network device is a router or a gateway.

## Patentansprüche

1. Verfahren zum Zustellen von Nachrichten in einem Kommunikationsnetz, welches die folgenden Schritte umfasst:
- Überwachen einer Ankunftsrate von Nachrichten, die für einen geografischen Bereich bestimmt sind, innerhalb einer definierten Zeitspanne, **gekennzeichnet durch**
- bei Erreichen eines Schwellwertes für die besagten während der besagten Zeitspanne eingehenden Nachrichten Einrichten einer Multicast-Gruppe für die Leitweglenkung der besagten Nachrichten zu dem besagten geografischen Bereich, indem an jedes Netzgerät, das für die Zustellung der besagten Nachrichten zuständig ist, eine Beitrittsaufforderung gesendet wird, damit es der besagten Multicast-Gruppe beitritt; und
- nach Einrichten der besagten Multicast-Gruppe Zustellen der besagten Nachrichten in dem besagten geografischen Bereich.

2. Verfahren gemäß Anspruch 1, welches den weiteren Schritt umfasst, alle weiteren, an den besagten geografischen Bereich gerichteten Nachrichten, die nach der Einrichtung der besagten Multicast-Gruppe eingehen, über die besagte Multicast-Gruppe zuzustellen.

3. Verfahren gemäß Anspruch 1 oder 2, welches den weiteren Schritt umfasst, die besagte Multicast-Gruppe aufzulösen, nachdem eine vorab definierte Zeitspanne vergangen ist, in der keine weiteren für den besagten geografischen Bereich bestimmten Nachrichten eingehen.

4. Verfahren gemäß einem der vorstehenden Ansprüche, wobei die besagten Nachrichten, die für den besagten geografischen Bereich bestimmt sind, jeweils durch eine geografische Zieladresse definiert sind.

5. Verfahren gemäß Anspruch 4, wobei die besagte geografische Zieladresse der besagten Nachrichten identisch oder ähnlich ist.

6. Verfahren gemäß einem der vorstehenden Ansprüche, wobei die besagte Überwachung der besagten Ankunftsrate mithilfe eines Nachrichtenzählers durchgeführt wird, der Nachrichten mit gleicher oder ähnlicher geografischer Zieladresse zählt.

7. Netzgerät, welches in einem Kommunikationsnetz angeordnet ist und Mittel beinhaltet, um das Verfahren gemäß den Ansprüchen 1 bis 6 anzuwenden.

8. Netzgerät gemäß Anspruch 7, wobei das besagte Netzgerät ein Router oder eine Gateway ist.

## Revendications

1. Procédé de délivrance de messages dans un réseau de communication, comprenant les étapes suivantes :
- surveiller un débit d'arrivée de messages destinés à une zone géographique dans un intervalle de temps défini, **caractérisé par**
- l'établissement, lorsqu'un seuil est atteint pour lesdits messages arrivant dans ledit intervalle de temps, d'un groupe de multidiffusion pour le routage desdits messages vers ladite zone géographique en envoyant une demande de rejoindre à chaque dispositif de réseau responsable de la délivrance desdits messages pour qu'il rejoigne ledit groupe de multidiffusion ; et
- la délivrance desdits messages vers ladite zone géographique lorsque ledit groupe de multidiffusion est établi.

2. Procédé selon la revendication 1, comprenant l'étape supplémentaire de délivrance de tout message supplémentaire destiné à ladite zone géographique arrivant après l'établissement dudit groupe de multidiffusion, par le biais dudit groupe de multidiffusion.

3. Procédé selon la revendication 1 ou 2, comprenant l'étape supplémentaire de suppression dudit groupe de multidiffusion après l'écoulement d'un intervalle de temps prédéfini pendant lequel aucun message supplémentaire destiné à ladite zone géographique n'arrive.

4. Procédé selon l'une quelconque des revendications précédentes, lesdits messages destinés à ladite zone géographique étant définis chacun par une adresse de destination géographique.

5. Procédé selon la revendication 4, ladite adresse de destination géographique desdits messages étant identique ou similaire.

6. Procédé selon l'une quelconque des revendications précédentes, ladite surveillance dudit débit d'arrivée s'effectuant au moyen d'un compteur de messages qui compte les messages contenant une adresse cible géographique identique ou similaire.

7. Dispositif de réseau situé dans un réseau de communication, comprenant un moyen pour mettre en oeuvre le procédé selon une des revendications 1 à 6.

8. Dispositif de réseau selon la revendication 7, ledit dispositif de réseau étant un routeur ou une passerelle.
